# EUROPÄISCHE PATENTSCHRIFT

(11) **EP 0 790 688 B1**
(45) Veröffentlichungstag und Bekanntmachung des Hinweises auf die Patenterteilung: **13.09.2000**
(21) Anmeldenummer: 97400110.9
(22) Anmeldetag: 20.01.1997
(51) Int. Cl.: H02G 9/10

(54) **Vorrichtung zur Unterbringung der Baugruppen von aktiven und passiven Knotenpunkten fernmeldetechnischer Anlagen**
Sheltering device for active and passive connection components of telecommunication equipment
Dispositif d'abri pour composants de connexions actives et passives d'installations de télécommunication

(30) Priorität: 14.02.1996 DE 29602552 U
(43) Veröffentlichungstag der Anmeldung: 20.08.1997
(73) Patentinhaber: ALCATEL, 75008 Paris (FR)
(72) Erfinder: Grajewski, Franz, Dr.-Ing., 31655 Stadthagen (DE); Stieb, Werner, Dipl.-Ing., 31655 Stadthagen (DE)
(74) Vertreter: Mende, Eberhard, Dipl.-Ing.

(56) Entgegenhaltungen:
- EP-A- 0 040 651
- EP-A- 0 388 126
- EP-A- 0 446 104
- DE-A- 3 150 166
- DE-U- 29 502 938

## Beschreibung

Die Erfindung betrifft eine Vorrichtung zur Unterbingung der Baugruppen von aktiven und passiven Knotenpunkten fernmeldetechnischer Anlagen zur Verlegung im Erdreich, bestehend aus einem Behälter aus Metall mit einem abnehmbaren Deckel sowie einem in dem Behälter untergebrachten, herausnehmbaren Träger für die Baugruppen.

Bei der überirdischen Anordnung von elektronischen Komponenten in üblichen Gehäusen entsteht häufig ein Temperaturproblem aufgrund der von den Komponenten abgegebenen Verlustleistung und bei hohen Umgebungstemperaturen aufgrund des sich durch Sonneneinstrahlung erwärmenden Gehäuses. Darüberhinaus kann es infolge der Temperaturunterschiede zwischen Tag und Nacht zu einer Kondensatbildung im Innern des Behälters kommen.

Sowohl die Feuchtigkeit als auch die hohen Temperaturen können zu einem kurzzeitigen oder auch dauernden Funktionsausfall der elektronischen Komponenten führen.

Aus der DE-PS 31 50 166 ist ein Kühlsystem für nachrichtentechnische Geräte hoher Verlustleistung bekannt, bei welchem die nachrichtentechnischen Geräte in einem Behälter aus gut wärmeleitendem Material untergebracht sind, der im Erdreich verlegt ist, sodaß eine gute Wärmeableitung zustande kommt. Die nachrichtentechnischen Geräte sind mit der Wand des Behälters wärmeleitend verbunden. Zur zusätzlichen Kühlung ist ein mit Kühlflüssigkeit gefülltes Rohrleitungssystem vorgesehen, bei welchem der Flüssigkeitskreislauf allein infolge des Temperatur- und Dichteunterschiedes zustande kommt.

Bei diesem Behälter ist nachteilig, daß dieser entweder begehbar sein muß, damit an den nachrichtentechnischen Geräten gearbeitet werden kann. Dann ist er sehr schwer und von daher kostenträchtig. Im anderen Fall sind die nachrichtentechnischen Geräte von außen schwer zugänglich. Darüberhinaus werden durch das Rohrleitungssystem die Herstellungskosten und die Montagearbeiten wesentlich erhöht.

Die EP 0 446 104 A1 beschreibt eine Vorrichtung zur Montage und zur Abkühlung von elektronischen Bauteilen mit einer Hülle, innerhalb der die elektronische Einrichtung sich befindet. Die Hülle besteht aus einem topfartigen Behälter aus Metall mit einem Bodenteil und einem Steitenteil. In dem Behälter befindet sich ein Wärmetauscher aus Aluminium, der sich mit seinen Rippen am Boden der Hülle abstützt. Aus dem Boden ragen mit diesem verbundene Hülsen heraus, in welche Schraubbolzen eingeschraubt sind, mit deren Hilfe die elektronischen Bauteile an der den Rippen gegenüberliegenden Oberfläche des Wärmetauschers befestigt sind.

Aus dem DE-GM 295 09 38 ist ein im Erdreich untergebrachter Behälter mit einer herausnehmbaren Halterung für die elektronischen Komponenten bekannt. Der Behälter besteht vorzugsweise aus Stahl, so daß ein Großteil der durch die Komponenten erzeugten Wärme durch Wärmeleitung ins umgebende Erdreich abgeführt werden kann. Die Wärmeübertragung von den Komponenten zur Behälterwand erfolgt hier weitestgehend durch Konvektion. Bei einer dichten Belegung des Behälters mit Komponenten reicht diese Art der Wärmeabfuhr nicht aus.

Der Erfindung liegt von daher die Aufgabe zugrunde, bei der bekannten Vorrichtung die Abführung der erzeugten Verlustwärme erheblich zu verbessern.

Diese Aufgabe wird durch die im Kennzeichen des Anspruchs 1 erfaßte Merkmale gelöst.

Dadurch, daß der Träger für die Baugruppen aus einem wärmeleitfähigen Material besteht, die Baugruppen an dem Träger mit wärmeleitendem Kontakt befestigt sind und der Träger über seine Kühlrippen mit dem Behälter in Kontakt steht, erfolgt eine optimale Abführung der Wärme. Neben der Abführung der Wärme durch Konvektion geschieht dies zusätzlich durch Wärmeleitung. Dadurch wird sichergestellt, daß nahezu zu jeder Zeit die gleiche Temperatur im Behälterinnern vorherrscht.

Weitere vorteilhafte Ausführungsbeispiele sind in den Unteransprüchen erfaßt.

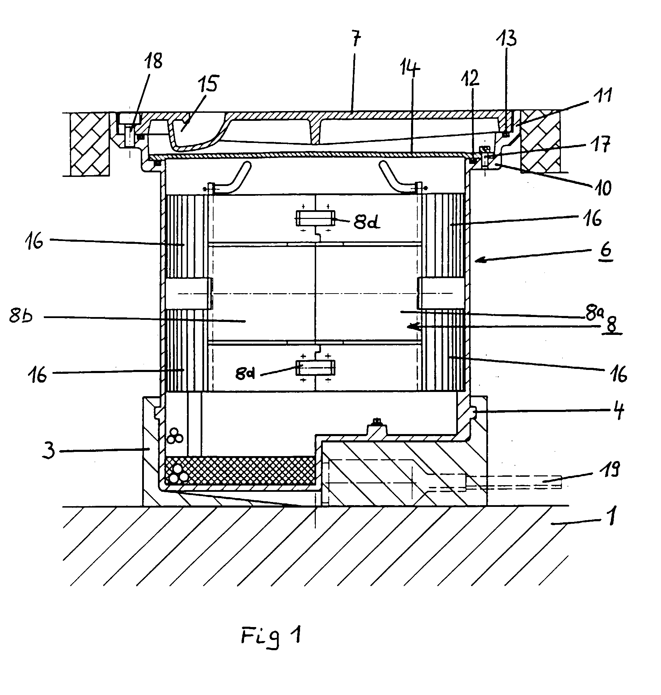

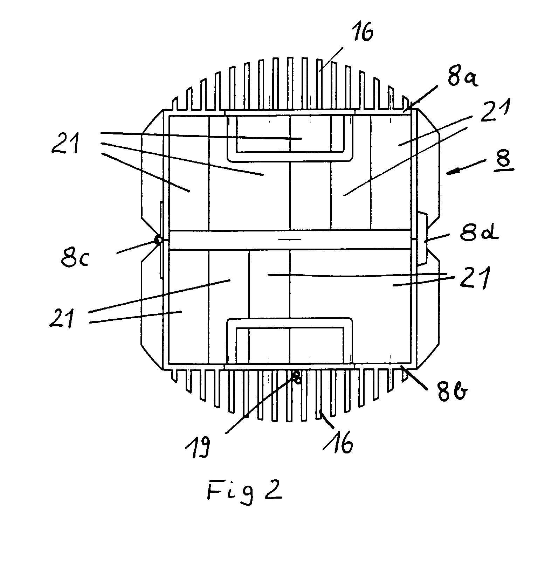

Die Erfindung ist anhand der in den Figuren 1 und 2 schematisch dargestellten Ausführungsbeispiele näher erläutert.

Der Behälter 6 ist ein Hohlkörper, vorzugsweise in rotationssymmetrischer Ausführung. Er ist in seiner bevorzugten Ausführungsform aus Gußeisen hergestellt, jedoch sind auch andere Herstellungsarten, wie z. B. Aluminiumguß, denkbar.

Der Innenraum eines hohlen Trägers 8 dient zur Aufnahme der in Figur 1 nicht dargestellten Baugruppen.

Eine umlaufende Wulst 4 bildet mit dem Behälter 6 ebenfalls ein Teil. Der Vorteil dieser Wulst 4 wird weiter unten erläutert.

Am oberen Rand des Behälters 6 sind eine erste Erweiterung 10 mit einer umlaufenden Ringnut 12 sowie eine zweite Erweiterung 11 ebenfalls mit einer umlaufenden Ringnut 13 vorgesehen. In beiden Ringnuten 12 und 13 ist je eine nicht näher bezeichnete Dichtung, z. B. in Form eines Dichtungsringes untergebracht. Die jeweilige Dichtung kann jedoch auch in einer entsprechenden Ringnut im jeweiligen Deckel vorgesehen sein.

Auf der Erweiterung 10 liegt ein Deckel 14 aus Grauguß, der mit Schraubbolzen 17 an der Erweiterung 10 befestigt ist.

Durch den Deckel 14 ist im Zusammenwirken mit der Dichtung in der Ringnut 12 und den Schraubbolzen 17 sicherzustellen, daß der Behälter 6 druckdicht verschlossen ist und einen Innendruck von 0,05 bis 1,5 bar sicher abdichtet.

Auf der zweiten Erweiterung 11 liegt der Gehwegdeckel 7 auf, der über Schraubbolzen 18 auf der Erweiterung 11 festgelegt ist und mittels einer in der Ringnut 13 vorgesehenen Dichtung den Behälter 6 gegen Eintritt von Feuchtigkeit abdichtet. Eine im Gehwegdeckel 7 vorgesehene Griffmulde 15 erleichtert das Abnehmen des Deckels 7. Der Gehwegdeckel 7 soll möglichst ohne Überstände mit der Wegoberfläche abschließen.

Die Montage des Unterflurbehälters läuft folgendermaßen ab:

Zunächst wird ein Fundament 1, z. B. aus Magerbeton in einer vorgegebenen Tiefe gegossen. Nach dem Aushärten des Magerbetons wird eine Schalung nach Art einer Springform auf das Fundament 1 gestellt. Die Springform weist mehrere gleichmäßig über den Umfang verteilte nicht dargestellte Gewindestangen auf, auf deren freien Enden der Gehwegdeckel 7 festgelegt ist. Durch unterschiedliche Höheneinstellung der Auflager für den Gehwegdeckel 7 kann der Gehwegdeckel 7 in Bezug auf die Höhe und die Neigung dem Gehweg angepaßt werden. Das Kabel 19 wird radial in den Behälter 6 eingeführt und die Einführung nach außen abgedichtet. Das Kabel 19 ist üblicherweise ein Bündel aus einem herkömmlichen Nachrichtenkabel, einem Stromversorgungskabel und einem Lichtwellenleiterkabel.

Das Einführen des Kabels 19 in den Behälter 6 sowie das Abdichten mittels eines nicht näher bezeichneten Schrumpfschlauches bzw. einer Aufteilungskappe erfolgt vorteilhafterweise bereits im Werk, so daß ein vorkonfektionierter Behälter 6 angeliefert wird, dessen Kabel 19 an die an der Baustelle vorhandenen Kabel angeschlossen werden müssen.

Nachdem der Behälter 6 mittels der Gewindestangen auf der Springformschalung befestigt ist, wird ein Mörtelbett 3 gegossen, welches den Behälter 6 festlegt. Die umlaufende Wulst 4 verstärkt die Verbindung zwischen dem Behälter 6 und dem Mörtelbett 3.

Damit der die Baugruppen tragende Träger 8 aus dem Behälter 6 zu Meßzwecken bei der Fehlerortung entnommen werden kann, sind mehrere Windungen des Kabels 19 bzw. der freigelegten Kabelseelen im unteren Bereich des Behälters 6 untergebracht.

Abschließend werden die beiden Deckel 14 und 7 montiert und die Baugrube mit Füllsand verfüllt.

Der Träger 8 ist in der Figur 2 gesondert dargestellt.

Der Träger 8 besteht aus zwei Hälften 8a und 8b, die über ein scharnierartiges Gelenk 8c klappbar miteinander verbunden sind. Mittels einer Verschlußeinrichtung 8d können die Hälften 8a und 8b im geschlossenen Zustand verriegelt werden.

Jede der Hälften 8a und 8b weist an einer ihrer Flächen eine Vielzahl von Kühlrippen 1b auf, deren Enden auf einer Kreisbahn verlaufen und die im Einbauzustand an der Innenwand des Behälters 6 anliegen.

Jede der Hälften 8a und 8b kann gemeinsam mit den Kühlrippen 16 durch Strangpressen aus Aluminium hergestellt werden. Auch ist eine Schweißkonstruktion denkbar.

Ungefähr in der Mitte des Trägers 8 (s. Fig. 1) sind die Kühlrippen 16 unterbrochen. Hier erfolgt der Anschluß des Kabels 19 in einer Weise, wie sie aus der sogenannten 19"-Technik bekannt ist. Das Kabel 19 wird zwischen zwei Kühlrippen 16 diesem Bereich zugeführt. Die elektronischen Komponenten 21 sind wie aus der 19"-Technik bekannt, an der inneren Oberfläche der Hälften 8a und 8b durch Stecken befestigt. Beim Stecken erfolgt gleichzeitig die elektrische Kontaktierung ebenso wie die wärmeleitende Kontaktierung der Komponenten 21 mit den Hälften 8a und 8b.

## Patentansprüche

1. Vorrichtung zur Unterbringung der Baugruppen (21) von aktiven und passiven Knotenpunkten fernmeldetechnischer Anlagen zur Verlegung im Erdreich, bestehend aus einem Behälter (6) aus Metall mit einem abnehmbaren Deckel (14) sowie einem in dem Behälter (6) untergebrachten herausnehmbaren hohlen Träger (8) für die Baugruppen gekennzeichnet durch folgende Merkmale:
a) die Baugruppen (21) sind in wärmeleitendem Kontakt an der inneren Oberfläche des Trägers (8,8a,8b) befestigt,
b) der Träger (8,8a,8b) besteht aus wärmeleitendem Material,
c) der Träger (8,8a,8b) weist an seiner äußeren Oberfläche eine Vielzahl von radial nach außen gerichteten Kühlrippen (16) auf und
d) der Träger (8,8a,8b) hat über die Kühlrippen (16) wärmeleitenden Kontakt zur inneren Mantelfläche des Behälters (6).

2. Vorrichtung nach Anspruch 1, dadurch gekennzeichnet, daß die Baugruppen (21) an der inneren Oberfläche des Trägers (8,8a,8b) angeschraubt bzw. aufgesteckt sind.

3. Vorrichtung nach Anspruch 1 oder 2, dadurch gekennzeichnet, daß die Kühlrippen (16) in vertikaler Richtung verlaufen und nahezu entlang ihrer gesamten Länge an der Innenwandung des Behälters (6) anliegen.

4. Vorrichtung nach einem der Ansprüche 1 bis 3, dadurch gekennzeichnet, daß der Träger (8,8a,8b) ein Hohlkörper mit einem im Querschnitt rechteckförmigen Hohlraum ist.

5. Vorrichtung nach Anspruch 4, dadurch gekennzeichnet, daß die Kühlrippen (16) zumindest an zwei einander gegenüberliegenden Wandteilen des Trägers (8,8a,8b) angeordnet sind und die Enden der Kühlrippen (16) auf einer kreisförmigen Bahn verlaufen, deren Radius gleich dem inneren Radius des Behälters (6) mit kreisförmigem Querschnitt ist.

6. Vorrichtung nach einem der Ansprüche 1 bis 5, dadurch gekennzeichnet, daß der Träger (8) aus zwei Hälften (8a,8b) besteht, die über eine scharnierartige Verbindung (8c) verbunden sind und die Hälften (8a,8b) über einen Verbindungsmechanismus (8d) zu dem geschlossenen Träger (8) verbindbar sind.

7. Vorrichtung nach Anspruch 6, dadurch gekennzeichnet, daß die Baugruppen (21) an beiden Hälften (8a,8b) des Trägers (8) befestigt sind.

8. Vorrichtung nach einem der Ansprüche 1 bis 7, dadurch gekennzeichnet, daß der Träger (8) aus Metall vorzugsweise Aluminium besteht.

9. Vorrichtung nach Anspruch 8, dadurch gekennzeichnet, daß die Hälften (8a,8b) der Träger (8) zumindest teilweise als Strangpreßprofile ausgebildet sind.

## Claims

1. Device for laying underground for housing the modules (21) of active and passive nodes belonging to telecommunications systems, comprising a metal container (6) having a removable cover (14) and having a withdrawable hollow carrier (8) for the modules, which carrier is housed in the container (6), characterised by the following features:
a) the modules (21) are fixed against the inner surface of the carrier (8, 8a, 8b) in thermally conductive contact therewith,
b) the carrier (8, 8a, 8b) consists of thermally conductive material,
c) on its outer surface the carrier (8, 8a, 8b) has a plurality of cooling fins (16) directed radially outwards, and
d) via the cooling fins (16) the carrier is in thermally conductive contact with the inner circumferential surface of the container (6).

2. Device according to claim 1, characterised in that the modules (21) are screwed or plugged in against the inner surface of the carrier (8, 8a, 8b).

3. Device according to claim 1 or 2, characterised in that the cooling fins (16) extend in a vertical direction and rest against the inside wall of the container (6) for almost their entire length.

4. Device according to any of claims 1 to 3, characterised in that the carrier (8, 8a, 8b) is a hollow body containing a hollow space of square or rectangular cross-section.

5. Device according to claim 4, characterised in that the cooling fins (16) are arranged at least on two mutually opposing parts of the wall of the carrier (8, 8a, 8b) and the ends of the cooling fins (16) extend along a circular path whose radius is equal to the inside radius of the container (6) of circular cross-section.

6. Device according to any of claims 1 to 5, characterised in that the carrier (8) comprises two halves (8a, 8b) which are connected by a hinge-type connection (8c) and the halves (8a, 8b) can be connected by means of a connecting mechanism (8d) to form a closed carrier (8).

7. Device according to claim 6, characterised in that the modules (21) are fastened to both halves (8a, 8b) of the carrier (8).

8. Device according to any of claims 1 to 7, characterised in that the carrier (8) is of metal and preferably of aluminium.

9. Device according to claim 8, characterised in that the halves (8a, 8b) of the carrier (8) are formed at least partly from extruded profiles.

## Revendications

1. Dispositif pour le logement des modules (21) de noeuds actifs et passifs d'installations de télécommunications pour la pose sous terre, se composant d'un récipient (6) en métal avec un couvercle amovible (14) ainsi que d'un support creux (8) amovible logé dans le récipient (6) pour les modules, caractérisé par les particularités suivantes :
a) les modules (21) sont fixés à la surface intérieure du support (8, 8a, 8b) avec un contact à conductivité thermique,
b) le support (8, 8a, 8b) est composé d'un matériau à conductivité thermique,
c) le support (8, 8a, 8b) présente, à sa surface extérieure, un grand nombre de nervures de refroidissement (16) orientées radialement vers l'extérieur et
d) le support (8, 8a, 8b) a, via les nervures de refroidissement (16), un contact à conductivité thermique avec la surface intérieure du manteau du récipient (6).

2. Dispositif selon la revendication 1, caractérisé par le fait que les modules (21) sont vissés respectivement enfichés sur la surface intérieure du support (8, 8a, 8b).

3. Dispositif selon la revendication 1 ou 2, caractérisé par le fait que les nervures de refroidissement (16) sont posées dans le sens vertical et touchent pratiquement sur toute leur longueur la paroi intérieure du récipient (6).

4. Dispositif selon l'une des revendications 1 à 3, caractérisé par le fait que le support (8, 8a, 8b) est un corps creux avec un espace creux de section rectangulaire.

5. Dispositif selon la revendication 4, caractérisé par le fait que les nervures de refroidissement (16) sont montées sur au moins deux parties de parois du support (8, 8a, 8b) se faisant face et que les extrémités des nervures (16) se trouvent sur un circuit circulaire dont le rayon est égal au rayon intérieur du récipient (6) à section circulaire.

6. Dispositif selon l'une des revendications 1 à 5, caractérisé par le fait que le support (8) se compose de deux moitiés (8a, 8b) reliés au moyen d'une liaison en forme de charnière (8c) et que les moitiés (8a, 8b) peuvent être reliées au support (8) fermé au moyen d'un mécanisme de liaison (8d).

7. Dispositif selon la revendication 6, caractérisé par le fait que les modules (21) sont fixés sur les deux moitiés (8a, 8b) du support (8).

8. Dispositif selon l'une des revendications 1 à 7, caractérisé par le fait que le support (8) est composé de métal, de préférence d'aluminium.

9. Dispositif selon la revendication 8, caractérisé par le fait que les moitiés (8a, 8b) des supports (8) sont conçues, au moins en partie, comme profilés extrudés.
